# EUROPEAN PATENT SPECIFICATION

(11) **EP 2 364 599 B1**
(45) Date of publication and mention of the grant of the patent: **06.08.2014**
(21) Application number: 11155992.8
(22) Date of filing: 25.02.2011
(51) Int. Cl.: A23G 3/00, A23G 3/54, A23G 3/42, A23L 1/0522, A23G 3/34

(54) **Gummy-containing soft candy and production method thereof**
Gummihaltige weiche Süßigkeit und Herstellungsverfahren dafür
Bonbon mou contenant de la gélatine et son procédé de production

(30) Priority: 25.02.2010 JP 2010040007
(43) Date of publication of application: 14.09.2011
(73) Proprietor: Uha Mikakuto Co., Ltd., Yamatokooriyama-shi, Nara 639-1031 (JP)
(72) Inventor: Masumoto, Koichi, Yamatokooriyama-shi Nara 639-1031 (JP); Ushio, Kenji, Yamatokooriyama-shi Nara 639-1031 (JP); Matsui, Takeki, Yamatokooriyama-shi Nara 639-1031 (JP); Yamada, Yasumasa, Yamatokooriyama-shi Nara 639-1031 (JP); Yamada, Ichiro, Yamatokooriyama-shi Nara 639-1031 (JP)
(74) Representative: Vossius & Partner

(56) References cited:
- JP-A- 2004 208 635
- JP-A- 2008 073 019
- US-A- 4 948 615
- US-A- 6 060 078
- US-A1- 2007 160 707

## Description

### Technical Field

The present invention relates to a gummy-containing soft candy having a new food texture and the production method thereof.

### Background Art

According to Japanese Agricultural Standards (June 4, 1973, MAFF Notification No. 1086), Candies are grouped into hard candies having a water content of 6% or less and soft candies having a water content of 6 to 20%. The former candies are characteristically hard, while the latter candies are soft. Both candies contain carbohydrates such as sugar and glucose syrup as primary raw materials. Various soft candies are produced, as the kinds and the waters content of their auxiliary materials are altered. In particular, soft candies containing oils/fats and gelatin as auxiliary materials and additionally air bubbles are popular with many consumers as familiar favorite foods. Soft candies are largely different from hard candies in that they can be provided with various food textures and, in diversification of the consumers' taste, various soft candies are under development. Examples of such products include soft candies prepared by mixing and dispersing a setting material prepared by concentrating jelly syrup by boiling and then cooling in the concentrate of a soft dough containing an oil prepared by concentration by boiling and subsequent cooling (see Patent Document 1), soft candies prepared by adding as center materials or dispersing cookies, nuts, dry fruits or the like in soft dough containing jelly fragments dispersed therein (see Patent Document 2), a soft candy prepared by molding and solidifying a liquid mixture of sol jelly and different gel jelly fragments, as the surface of the gel jelly fragments remains partially in the dissolved state (see Patent Document 3) and the like.

Examples of the starch-containing soft candies include air bubble-containing soft candies additionally containing carbohydrates as primary raw materials and oils and gelatin as auxiliary materials, which are provided with a new food texture of favorable crispness and fragility, as rice starch is used as part of the carbohydrate raw material (see Patent Document 4), soft candies containing α starch in a soft candy dough mainly containing dried fruit fleshes (see Patent Document 5) and the like. However, in these soft candies, the starches such as rice starch and α starch are contained in the soft candy dough and not in the linear gummy.

The applicant has proposed soft candies improved in food texture in various forms and such soft candies (e.g., "Puccho"(registered trade name)) are favorably accepted by the consumers in Japan. Specifically in the case of the new soft candies so far proposed by the applicant, a method of dispersing a solid matter such as granular or sheet-shaped gummy therein was applied to soft candies for improvement in crispness, instead of adding various substances to soft candies as additives (see Patent Documents 6, 7, 8 and 9). However, further studies indicated that the gummy should be dispersed almost uniformly in the soft candy dough in actual production in order to make the gummy's food texture more recognizable. Thus in order to disperse gummy uniformly in a soft candy dough, various measures, such as severe control of the temperature of the soft candy dough, are taken during dispersion of the gummy and there are still various studies to be made for its favorable continuous production.

The present applicant also proposed a gummy-containing soft candy containing a gummy uniformly dispersed in a soft candy dough (Patent Document 10). In the configuration of the linear gummy being enclosed by the soft candy dough, the difference in food texture between the gummy and the soft candy can be favorably tasted even if any region of the soft candy is bitten. However, the linear gummy-containing candy is produced by a batchwise method of preparing the linear gummy in advance and there are still studies to be made for favorable continuous production.

JP-A 2004-208635 discloses a soft candy enclosing a gummy rope.

JP-A 2008-73019 discloses a sticky dough comprising a starch derived from potato.

### Patent Literature

Patent Document 1: JP-A No. 4-370063
Patent Document 2: JP-A No. 10-56
Patent Document 3: JP-A No. 2000-125769
Patent Document 4: JP-A No. 2007-75060
Patent Document 5: JP-A No. 2008-73020
Patent Document 6: JP No. 3405323
Patent Document 7: JP No. 3555597
Patent Document 8: JP No. 3794416
Patent Document 9: JP No. 4380619
Patent Document 10: JP No. 3769652

### Summary of Invention

### Technical Problem

An object of the present invention is to improve the productivity in producing a soft candy having a new food texture and to provide a gummy-containing soft candy having a new food texture that can exhibit advantage effects of the soft candy and the gummy being used in combination and that is produced at drastically improved productivity and the production method thereof.

### Solution to Problem

After intensive studies to improve the productivity in producing a gummy-containing soft candy in the shape in which the periphery of a linear gummy is covered with a soft candy dough, as described in Patent Document 10 above, the inventors used a method of forming a soft candy by simultaneously extrusion of a gummy dough and a soft candy dough and found problems for example that the gummy dough deposits on the production machines and gelation of the gummy dough demands an elongated period. After re-examination of the components for the gummy dough, they have found that these problems can be solved and made the present invention.

Specifically, the present invention relates to:
(1) a gummy-containing soft candy, characterized in that a linear gummy having a water content of 10 to 25 wt % is inserted into a soft candy dough containing one or more carbohydrates as solid matter, as the linear gummy is enclosed by the soft candy dough and the linear gummy contains a starch, wherein the α starch is one or more selected from the group consisting of dent corn starch, waxy corn starch, wheat starch, and non-waxy rice starch;
(2) the gummy-containing soft candy according to (1), wherein the content of the gummy is 5 to 60 wt %; and
(3) a method of producing the gummy-containing soft candy according to (1) or (2), comprising extruding the gummy dough and the soft candy dough simultaneously.

### Advantageous Effects of Invention

According to the present invention, it is possible to assure the favorable properties obtained when a soft candy and a gummy are used in combination, provide a soft candy with new soft food texture, and increase the productivity thereof significantly by the configuration in which a linear gummy containing α starch and having a water content of 10 to 25 wt % is enclosed with a soft candy.

### Description of Embodiments

The gummy-containing soft candy according to the present invention is characterized in that a linear gummy containing α starch and having a water content of 10 to 25 wt % is enclosed in a soft candy dough. It is possible with these characteristics to assure the favorable properties obtained when a soft candy and a gummy are used in combination, provide a soft candy with new soft food texture, and increase the productivity thereof significantly.

In the present invention, at least one linear gummy should be inserted into the soft candy dough. In production of the gummy-containing soft candy according to the present invention, the gummy in the production phase is extruded and inserted into the soft candy dough linearly, as will be described below. Thus in the present invention, the state in which the inserted gummy is extending from one end to the other end of the soft candy dough is called "linear".
The cross-sectional shape of the linear gummy in the lengthwise direction is not particularly limited, but may be circular, elliptic, polygonal such as triangular or quadrangular, or the like. In the present invention, the gummy dough can be prepared by extrusion through nozzles, as described below. Thus if a concentric three⁻ or more⁻layered nozzle is used, the gummy may be extruded out of the central nozzle or may be extruded out of other nozzle, giving a linear gummy having a cross-sectional shape of hollow tube. Multiple small-diameter linear gummies each having an almost circular cross-sectional shape may be inserted into the soft candy dough by using multiple nozzles for extrusion of the gummy.

The shape of the nozzle is selected properly from circle, ellipse, and polygons such as triangle and quadrangle according to the cross-sectional shape of the gummy.

The size of the linear gummy is not particularly limited and may be adjusted to the size allowing oral intake of the gummy-containing soft candy containing a linear gummy enclosed with a soft candy dough.

The a starch used in the linear gummy is a gelatinized starch that is prepared by drying a hydrated and heat gelatinized starch rapidly at high temperature. The plants used for production of such starch include potato, corn, wheat, sweet potato, rice, cassava, beans and the like. The α starch for use in the present invention is preferably an α starch having a gelation potency and in particular, a starch derived from dent corn, waxy corn, wheat or non-waxy rice is used. These a starches may be used alone or in combination of two or more. When a starch other than α starch is used as the starch contained in the gummy, it becomes difficult to control gelation of the gummy because the starch has no gelation potency or demands a certain period for the gelation even if it has the gelation potency, and thus, such a starch is not suitable in the embodiment of the present invention, in which the linear gummy is enclosed with a soft candy dough, as the gummy dough and the soft candy dough are extruded simultaneously. Use of a starch other than α starch often results in decrease in productivity because the gummy easily deposits on production machines.

The content of the α starch in gummy is preferably 5 to 30 wt % as solid matter, for favorable expression of the effects of α starch and favorable preservation of the food texture of the gummy-containing soft candy.

The water content of the linear gummy is 10 to 25 wt %, preferably 12 to 23 wt %. When the water content of the linear gummy is less than 10 wt %, the viscosity of the gummy becomes too high, making it difficult to extrude the gummy dough and the soft candy dough simultaneously. Alternatively when the water content of the linear gummy is more than 25 wt %, the gummy becomes lower in dimensional stability and the food texture of the gummy is not recognizable when it is enclosed with the soft candy dough. The water content of the linear gummy is preferably determined according to the water content of the soft candy dough. For example, when the water contents of the soft candy dough and the gummy are different significantly from each other, migration of water may occur between the doughs, and for that reason, although the water content of one of the soft candy dough and the gummy may be higher, it is preferable to adjust the water contents so that there is no migration of water.

In addition to α starch, raw materials commonly used for gummy candies may be used for production of the linear gummy. Such raw materials for use include carbohydrates, gelatins, polysaccharides, and the mixtures thereof.

The carbohydrate for use may be, for example, one or more carbohydrates selected from known carbohydrates such as sugar, glucose, fructose, high fructose corn syrup, glucose-sucrose syrup, lactose, sugar alcohols, glucose syrup, and powder sugar. The content of the carbohydrate in the linear gummy is preferably in the range of 70 to 90 wt % as solid matter.
In the present invention, the term "as solid matter" indicates a content of the solid matter excluding water in the entire weight.

The gelatins that are usable include pigskin gelatin, cow bone gelatin, fish gelatin and the like. The gelatin content in the linear gummy may be determined arbitrarily according to the desired food texture, but is preferably smaller than the content of α starch. A gelatin content larger than that of α starch often leads to decrease in productivity because the gummy easily deposits on production machines.

The polysaccharide for use is one or more selected from known polysaccharides such as xanthan gum, jellan gum, carrageenan, alginic acid, soy bean polysaccharide, pectin, gum arabic, locust bean gum, guar gum, agar, pullulan, and curdlan. The content of the polysaccharide in the linear gummy may be determined arbitrarily according to the desired food texture, but is preferably smaller than the content of α starch. A polysaccharide content greater than the content of α starch often leads to drastic decrease in productivity because of increased possibility of deposition of the gummy on production machines.

The linear gummy may contain additionally, as needed, fondant, flavors, colors, sour agent and others. These components are not particularly limited if they are used for foods, and can be used in the range that does no exert adverse effects on the effects of α starch.

The soft candy dough for use in the present invention is the dough specified in the Japanese Agricultural Standards. Specifically, it is a concentrated candy dough having a water content of 6 to 20 wt % that is soft. When the water content of the soft candy dough is less than 6 wt %, the gumminess, a characteristic of the soft candy, disappears, and when it is more than 20 wt %, it becomes difficult to insert the linear gummy into the soft candy dough. Thus, the water content of the soft candy dough for use in the present invention is preferably in the range of 6.5 to 15 wt %, from the viewpoints of the gumminess of the soft candy dough and the easiness of insertion of the linear gummy into soft candy dough.

The soft candy dough contains one or more carbohydrate as solid matter.
The carbohydrate is not particularly limited and may be identical with the carbohydrate used for the gummy above. The content of the carbohydrates in the soft candy dough is preferably in the range of 70 to 90 wt % as solid matter, for favorable dimensional stability and food texture.

The soft candy dough may contain gelatin additionally as the solid matter. The gelatin may be identical with the gelatin used for the gummy. The content of gelatin in the soft candy dough is preferably in the range of 0.2 to 10 wt % as solid matter for favorable dimensional stability and gumminess.

The soft candy dough may contain an oil or fat additionally. The oil or fat is not particularly limited if it is an oil or fat for foods and may be a mixture of one or more selected from vegetable or animal oils and fats, the fractionated, hardened, and ester-exchanged oils and fats thereof, and milk fats such as butter and fresh cream. The content of the oil or fat in the soft candy dough is preferably in the range of 0.2 to 20 wt % as solid matter for favorable dimensional stability and food texture.

In addition to the components described above, the soft candy dough may contain polysaccharides, fondant, other flavors, colors, sour agent, carboxylate salts for pH adjustment, other starch-derived linear compounds, vitamin agents, calcium agents, protein agents, salts, spices, fruit juices, plant/animal extracts and the processed products thereof, dried plant/animal products and the processed products thereof and the like, and the component is not particularly limited if it is a component for use in foods, and it may be used in the amount that does not exert adverse effects on the physical properties of the soft candy.

In the gummy-containing soft candy according to the present invention, the linear gummy is inserted into the soft candy dough, as the periphery of it is covered with the soft candy dough. Preferably, the entire periphery of the linear gummy is covered with the soft candy dough. Part of the linear gummy, for example one or both ends thereof, may be exposed on the surface of the soft candy dough by processing, such as cutting, of the product containing a gummy enclosed completely with a soft candy dough, as described above.

The amount of the linear gummy contained in the soft candy dough is preferably 5 to 60 wt % with respect to the total amount of the gummy-containing soft candy (sum of the amounts of solid matter and water). A linear gummy content of less than 5 wt % prohibits production of the food texture of gummy. Alternatively, a linear gummy content of more than 60 wt % prohibits production of the food texture of the soft candy, leaving only the texture of the gummy. Although the content of the linear gummy in the soft candy dough varies according to the composition and the taste of the soft candy, it is preferably 5 to 60 wt %, more preferably 15 to 50 wt % in the total amount of the gummy-containing soft candy. In the gummy-containing soft candy according to the present invention, the region except, the linear gummy is the soft candy dough. Thus, the content of the soft candy dough is preferably 40 to 95 wt %, more preferably 50 to 85 wt %, with respect to the total amount of the gummy-containing soft candy. Candy ingredients other than gummy, for example soda candy, may also be contained.

The method of producing the gummy-containing soft candy according to the present invention is characterized by extruding the gummy dough and the soft candy dough simultaneously. In an embodiment, it is characterized by having the steps described below. Hereinafter, each step will be explained specifically.

The first step is a step of preparing a soft candy dough. The method of producing the soft candy dough may be carried out according to traditional methods, for example, by mixing and dissolving carbohydrates, oils or fats and, as needed, emulsifiers and the like under heat, concentrating the mixture by vaporizing the excess water, adding gelatin, fondant, flavors and the like as needed after cooling, adding crystallization accelerators additionally as needed, and kneading and aging the mixture. The soft candy dough can be prepared specifically according to the known methods described for example in Patent Documents 6, 7, 8, 9, and 10.

The second step is a step of preparing a gummy dough. The method of producing a gummy dough is not particularly limited, except that α starch is contained therein. However, it is for example produced by dissolving carbohydrates under heat, concentrating the mixture by vaporization of excess water, adding α starch to the concentrated mixture after cooling, and adding, as needed, gelatin, polysaccharides, acidulants, fruit juices, flavors and others, and heating the mixture once again and gelatinizing of the resulting mixture. The temperature and the period for vaporization to dryness are adjusted so that the water content in gummy becomes 10 to 25 wt %. The water content in gummy can be determined by a reduced-pressure drying method. In the present invention, since the α starch is added to the gummy dough, the method has an advantage that it does not demand a long period for gelation of the gummy dough by re-heating.

The third step is a step of extruding the soft candy dough obtained in the first step and the gummy dough obtained in the second step simultaneously. In the present invention, if the soft candy dough and the gummy dough are extruded simultaneously, it is possible to insert the gummy dough into the soft candy dough smoothly without deposition on the apparatuses for extrusion, allowing continuously production of the gummy-containing soft candy. Thus, for example as described in Patent Document 10, it is possible to increase the productivity in production of the gummy-containing soft candy distinctively, compared to the batchwise method of producing a linear gummy in advance.
The extrusion method for use may be a co-extrusion method. The extruding apparatus is not particularly limited. It is possible to obtain the gummy-containing soft candy according to the present invention, for example, by using an extruder having a concentric double-layered nozzle at the distal end, specifically by co-extruding linearly the soft candy dough through the outer nozzle and the α starch-containing gummy dough through the inner nozzle simultaneously. The gummy dough may then be extruded intermittently. The production machines suitable for the production method are extruders and the like. It is also possible to reduce the diameter of the gummy-containing soft candy to a desired value by stretching the extruded dough.

The linear gummy-containing soft candy extruded as described above may be cut to a desired length and converted into a desired shape by processing in a mold for molding. The gummy-containing soft candy according to the present invention thus obtained may be provided, as it is, as a product or may be subjected to post-treatment such as sugar coating or chocolate coating.

In another favorable embodiment, the gummy-containing soft candy according to the present invention is combined with a granular gummy or a tablet-shaped candy. For example, as described in Patent Documents 6 and 7, a granular gummy having a granular size of 20 to 80% of the height of the final soft candy may be dispersed in the gummy-containing soft candy according to the present invention. Alternatively as described in Patent Document 8 above, in addition to the granular gummy, a string-shaped or sheet-shaped gummy may be wound around part or all of the external surface of a soft candy dough. Alternatively, as described in Patent Document 9 above, a powder containing sugar as the primary raw material and additionally crystalline cellulose or tablets compression molded from fine particles or granules into a granular, rod-like or plate-like shape by a tableting machine may be contained in the soft candy. In addition, a foaming component may be contained in the soft candy.

### Examples

Hereinafter, the present invention will be described in detail with reference to Examples, but it should be understood that the present invention is not restricted thereby. The "%" and "part" in the following Examples means respectively "wt %" and "wt part", unless specified otherwise.

### (Preparative Example 1)

### (Preparation of soft candy dough)

Sugar (30 parts), glucose syrup (45.2 parts), a vegetable oil and fat (7 parts), and an emulsifier (0.5 part) were concentrated to a water content of 5% in a vacuum cooker (manufactured by SHIMIZU SCIENTIFIC INSTRUMENTS MFG Co.,Ltd.). After the mixture was cooled (to 90°C), it was mixed with gelatin (2.4 parts) in a pressurized mixer (manufactured by Hobart Corporation). Additionally, fondant (6.7 parts) was mixed therewith in a kneader (manufactured by Satake Chemical Equipment Mfg Ltd..) and the mixture was aged overnight to give a soft candy dough having a water content of 7%.

### (Preparative Example 2)

### (Preparation of gummy dough)

Sugar (20 parts) and glucose syrup (60 parts) were concentrated in a vacuum cooker to a water content of 17%. After the concentrated sugar solution was cooled (to room temperature), it was mixed with dent corn-derived α starch (15 parts), an acidulant (2 parts), a fruit juice (2 parts), and a flavor (0.2 part) and the mixture was re-heated (to 65°C) to give a gummy dough having a water content of 18%.

### (Example 1)

The soft candy dough prepared in Preparative Example 1 and the gummy dough prepared in Preparative Example 2 were fed into an extruder having a concentric double-layered nozzle mechanism (manufactured by Suehiro EPM Corporation), and the soft candy dough prepared in Preparative Example 1 and the gummy dough prepared in Preparative Example 2 were extruded at a rate of 1:1 (by weight) respectively from the external nozzle (inner diameter: 5 cm) and the internal nozzle (inner diameter: 3 cm) simultaneously, allowing insertion of the gummy so that the periphery of the linear gummy is enclosed by the soft candy dough. Subsequently, the extrudate obtained was stretched, molded into a rectangular shape, cut to pieces of 2.5 cm in length to give a gummy-containing soft candy according to the present invention (rectangular, size: approximately 5 g, length: 2 cm, height: 1 cm). The periphery of the linear gummy in the gummy-containing soft candy obtained after cutting was covered with the soft candy dough and the candy had a completely new soft food texture. In addition, the productivity was distinctively improved compared to batchwise methods, because it was possible to do continuous production smoothly by extrusion and there was almost no deposition of the dough on the machines during cutting.

### (Example 2)

A gummy dough obtained by using a waxy corn-derived α starch, replacing the dent corn-derived α starch contained in the gummy dough prepared in Preparative Example 2, and the soft candy dough above were extrusion-molded linearly and cut into pieces by the method of Example 1.

### (Example 3)

A gummy dough obtained by using a wheat-derived α starch, replacing the dent corn-derived α starch contained in the gummy dough prepared in Preparative Example 2, and the soft candy dough above were extrusion-molded linearly and cut into pieces by the method of Example 1.

### (Example 4)

A gummy dough obtained by using a non waxy rice-derived α starch, replacing the dent corn-derived α starch contained in the gummy dough prepared in Preparative Example 2, and the soft candy dough above were extrusion-molded linearly and cut into pieces by the method of Example 1.

### (Example 5)

A gummy dough obtained by adding gelatin (3 parts) in an amount smaller than that of α starch to the gummy dough prepared in Preparative Example 2 and the soft candy dough above were extrusion-molded linearly and cut into pieces by the method of Example 1.

### (Example 6)

A gummy dough obtained by adding polysaccharide (gum arabic) (1 part) in an amount smaller than that of α starch to the gummy dough prepared in Preparative Example 2 and the soft candy dough above were extrusion-molded linearly and cut into pieces by the method of Example 1.
The periphery of the linear gummy in each of the gummy-containing soft candies obtained in Examples 2 to 6 was covered with the soft candy dough, similarly to Example 1, and the candy had a completely new soft food texture. In addition, the productivity was distinctively improved compared to batchwise methods, because it was possible to do continuous production smoothly by extrusion and there was almost no deposition of the dough on the machines during cutting.

### (Example 7)

The amount of the linear gummy dough inserted into the soft candy dough by the method of Example 3 was adjusted to 7 wt %. The gummy-containing soft candy obtained had a completely new soft food texture, and the gummy was inserted therein reliably. In addition, the productivity was significantly improved as it was produced not by conventional batchwise methods but by a continuous production method and the deposition on machines during cutting was also reduced to a level not comparable with that of traditional methods.

### (Example 8)

The amount of the linear gummy dough inserted into the soft candy dough by the method of Example 3 was adjusted to 55 wt %. The gummy-containing soft candy obtained had a completely new soft food texture, and the gummy was inserted therein reliably. In addition, the productivity was significantly improved as it was produced not by conventional batchwise methods but by a continuous production method and the deposition on machines during cutting was also reduced to a level not comparable with that of traditional methods.

### (Reference Example 1)

A gummy dough obtained by using an α starch derived from tapioca starch or glutinous rice starch and the soft candy dough above were extrusion-molded linearly and cut into pieces by the method of Example 1. The gummy-containing soft candy obtained after cutting had a completely new soft food texture and the gummy was inserted reliably but deposition of the gummy dough on the production machines during cutting was severe and thus, the method was unsuitable for continuous production.

### (Comparative Example 1)

The soft candy dough and the gummy dough prepared in Preparative Example 2 were extruded linear by using an extruder by the method of Example 1, as the water content of the gummy dough was adjusted to 9%, but, because the viscosity of the gummy dough is too high, it was difficult to extrude them simultaneously even when the settings for the extruder were adjusted.

### (Comparative Example 2)

The gummy dough obtained by adjusting the water content of the gummy dough prepared in Preparative Example 2 to 26% and the soft candy dough above were extrusion-molded linearly and cut into pieces by the method of Example 1. The gummy-containing soft candy obtained had an unfavorable dimensional stability of the gummy, it was difficult to cut it into a favorable shape, and the gummy's food texture was not recognized strongly when it was taken.

### (Reference Example 2)

The amount of the linear gummy dough inserted into the soft candy dough by the method of Example 1 was adjusted to 4% in the final gummy-containing soft candy. The gummy's food texture was not recognized strongly when the gummy-containing soft candy obtained was taken.

### (Reference Example 3)

The amount of the linear gummy dough inserted into the soft candy dough by the method of Example 1 was adjusted to 61% in the final gummy-containing soft candy. The gummy's food texture was not recognized strongly when the gummy-containing soft candy obtained was taken.

### (Comparative Example 3)

A gummy dough obtained by adding gelatin (12 parts), polysaccharide (gum arabic, 3 parts) without cm starch to the gummy dough prepared in Preparative Example 2 and the soft candy dough above were extrusion-molded linearly and cut into pieces by the method of Example 1. It was possible to extrude them linearly but difficult to produce reliably because the viscosity of the gummy dough is high and, because the gummy-containing soft candy obtained after cutting contained no α starch in the gummy, deposition of the gummy dough on machines during cutting was severe and thus, the method was not suited for continuous production.

In batchwise production methods commonly used for production of common gummies, there should be a drying step of drying the concentrated sugar solution to a desired water content after addition of gelatin or the like thereto, and even if a linear or rope-shaped gummy dough is prepared, a large space is needed for the drying step. In contrast, the results in Examples 1 to 8 show that, by the production method according to the present invention in which α starch selected from the group consisting of dent corn starch, waxy corn starch, wheat starch and non-waxy rice starch is added to the linear gummy dough, it was possible to make the dough softer compared to the results of the polysaccharide in Comparative Example 3, to improve its suitability to machines drastically, and to perform extrusion-molding simultaneously with the soft candy dough. Thus, the production method according to the present invention is a method advantageous from the points of time and space and distinctively superior in productivity to batchwise methods.

## Claims

1. A gummy-containing soft candy, **characterized in that** a linear gummy having a water content of 10 to 25 wt % is inserted into a soft candy dough containing one or more carbohydrates as solid matter, as the linear gummy is enclosed by the soft candy dough and the linear gummy contains a starch, wherein the α starch is one or more selected from the group consisting of dent corn starch, waxy corn starch, wheat starch, and non-waxy rice starch.

2. The gummy-containing soft candy according to Claim 1, wherein the content of the gummy is 5 to 60 wt %.

3. A method of producing the gummy-containing soft candy according to Claim 1 or 2, comprising extruding the gummy dough and the soft candy dough simultaneously.

## Patentansprüche

1. Eine gummienthaltende weiche Süßigkeit, **dadurch gekennzeichnet, dass** ein linearer Gummi mit einem Wassergehalt von 10 bis 25 Gew.-% in einen weichen Süßigkeitsteig, der ein oder mehrere Kohlenhydrate als feste Substanz enthält, eingebracht wird, indem der lineare Gummi von dem weichen Süßigkeitsteig umschlossen wird, und der lineare Gummi α-Stärke enthält, wobei die α-Stärke eine oder mehrere, ausgewählt aus der Gruppe bestehend aus Zahnmaisstärke, Wachsmaisstärke, Weizenstärke und nicht-wachsartiger Reisstärke, ist.

2. Die gummienthaltende weiche Süßigkeit nach Anspruch 1, wobei der Gehalt des Gummis 5 bis 60 Gew.-% beträgt.

3. Ein Verfahren zur Herstellung der gummienthaltenden weichen Süßigkeit nach Anspruch 1 oder 2, umfassend gleichzeitiges Extrudieren des Gummiteigs und des weichen Süßigkeitsteigs.

## Revendications

1. Bonbon mou contenant de la gélatine, **caractérisé en ce qu'**une gélatine linéaire ayant une teneur en eau de 10 à 25 % en poids est introduite dans une pâte de bonbon mou contenant un ou plusieurs hydrate de carbone comme matière solide, la gélatine linéaire étant entouré de la pâte de bonbon mou et la gélatine linéaire contenant de l'alpha amidon, dans lequel l'alpha amidon est choisi parmi un ou plusieurs du groupe constitué d'amidon de maïs denté, d'amidon de maïs cireux, d'amidon de blé, et d'amidon de riz non cireux.

2. Bonbon mou contenant de la gélatine selon la revendication 1, dans lequel la teneur en gélatine est de 5 à 60% en poids.

3. Méthode pour la production de bonbon mou contenant de la gélatine selon la revendication 1 ou 2, comprenant l'extrusion de la pâte de gélatine et la pâte de bonbon mou simultanément.
